# EUROPEAN PATENT APPLICATION

(11) **EP 3 699 843 A1**
(43) Date of publication of application: **26.08.2020**
(21) Application number: 19158772.4
(22) Date of filing: 22.02.2019
(51) Int. Cl.: G06Q 10/08, G06Q 10/04, G06Q 50/28

(54) **LOGISTICS PLANNER**

(71) Applicant: Accenture Global Solutions Limited, Dublin 4 (IE)
(72) Inventor: MASCHE-PAKKALA, Philipp, 02400 Kirkkonummi (FI); KUOSMANEN, Pinja Marika, Finland (FI); NURMI, Janne Matias, 01680 Vantaa (FI); SOMMA, Tuuli Päivikki, 00180 Helsinki (FI)
(74) Representative: Swindell & Pearson Limited

(57) **Abstract**

Methods, systems, and apparatus, including computer programs encoded on a computer storage medium, for a logistics planner are disclosed. In one aspect, a method includes the actions of receiving data indicating orders for materials to be delivered to first locations and data indicating amounts of the materials stored at second locations. The actions further include providing the data indicating the orders for the materials to be delivered to the first locations and the data indicating the amounts of the materials stored at the second locations as inputs to models. The actions further include generating a graph that includes first nodes and second nodes. The actions further include generating a sub-graph. The actions further include determining an amount of each material to be delivered. The actions further include determining a route to travel and an amount of each material to transport.

## Description

### SUMMARY

According to an innovative aspect of the subject matter described in this application, a method for logistics planning includes the actions of receiving, by a computing device, data indicating orders for materials to be delivered to first locations and data indicating amounts of the materials stored at second locations; providing, by the computing device, the data indicating the orders for the materials to be delivered to the first locations and the data indicating the amounts of the materials stored at the second locations as inputs to models (a) that are trained using historical data that includes previous orders for the materials and other materials to be delivered to the first locations and other locations, previous amounts of the materials and the other materials stored at the second locations and the other locations, previous routes traveled by vehicles transporting the materials and the other materials, previous travel times for the previous routes, previous loading and unloading times for the vehicles, and previous costs associated with delivering the materials and the other materials and (b) that are configured to predict (i) a loading and unloading time for each vehicle, (ii) costs of transporting the materials to the first locations, and (iii) likelihoods of delay in transporting the materials to the first locations; based on the models, generating, by the computing device, a graph that includes first nodes that represent the first locations, second nodes that represent the second locations, wherein each pair of nodes is connected by a weighted edge that represents a cumulative cost of transporting the materials, between the locations associated with the pair of nodes; generating, by the computing device and for each material, each type of material, or each type of location that stores the material, a sub-graph that includes the nodes and edges associated with the respective material; based on the sub-graphs, determining, by the computing device and for each vehicle, an amount of each material to be delivered from a respective first location to a respective second location; and, based on the amount of each material to be delivered from the respective first location to the respective second location, determining, by the computing device and for each vehicle, a route to travel and an amount of each material to transport from the respective first location to the respective second location.

Other implementations of this aspect include corresponding systems, apparatus, and computer programs recorded on computer storage devices, each configured to perform the operations of the methods.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example system that optimizes transportation of inventories of various products to various locations.
FIG. 2 is a screenshot of a graphical interface that allows a user to place new location for a product delivery by a) dragging a pin onto a map location b) entering the latitude and longitude coordinates.
FIG. 3 is a screenshot of a graphical interface that displays the new delivery location and rough routes from the warehouses from where the material will be delivered.
FIG. 4 is a screenshot that displays the material requirements included in the order for a repair team.
FIG. 5 is a screenshot that displays various material requirements.
FIG. 6 is a screenshot that displays various warehouse locations and delivery locations.
FIG. 7 is a flowchart of an example process for logistics planning.
FIG. 8 is an example of a computing device and a mobile computing device.

Like reference numbers and designations in the various drawings indicate like elements.

### DETAILED DESCRIPTION

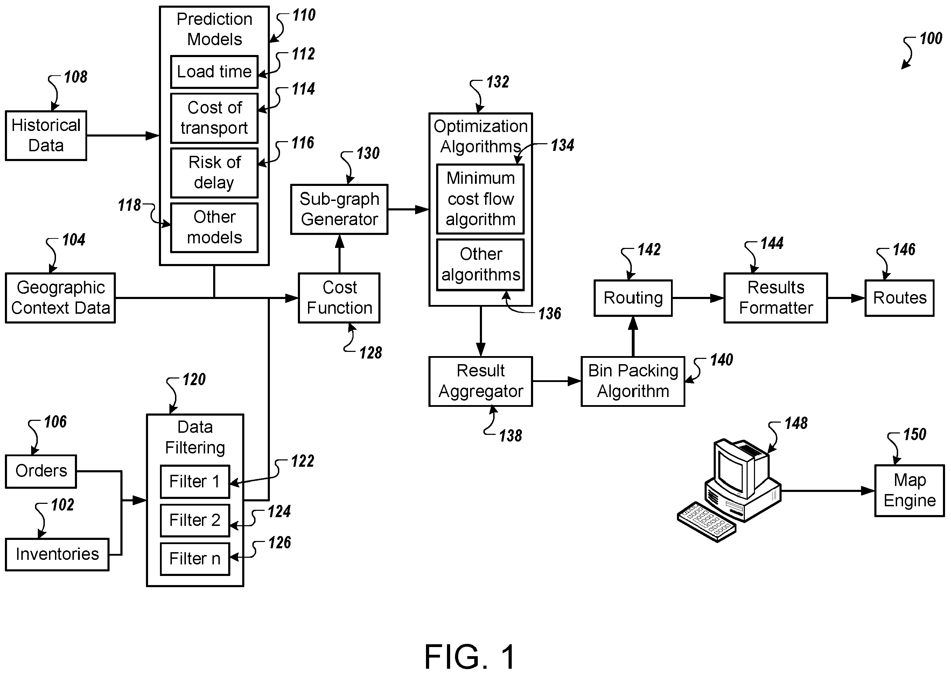

FIG. 1 illustrates an example system 100 that optimizes transportation of inventories 102 of various products to various locations. Briefly, and as described in more detail below, the system 100 receives data that includes locations of inventories 102 of products, geographic context data 104 that includes locations of delivery locations and warehouse locations of the inventories 102, orders 106 for each of the products for each of the locations, and historical data 108 that indicates previous orders and transportation of those orders. The system 100 processes the received data to determine the optimal way to deliver the requested products from the inventory locations.

In more detail, the system 100 receives orders 106. The orders 106 may specify the number of individual products that should be delivered to different locations. The orders 106 may also specify a time that the products should be delivered to the different locations. For example, the orders 106 may be related to elevator parts that should be delivered to different locations around a country. The orders 106 may indicate the number of elevator buttons to be delivered to each location and the time that the buttons should be delivered to each location. The orders 106 may also indicate the number of pulleys to be delivered to each location and the time that the pulleys should be delivered to each location.

The system 100 accesses locations of inventories 102 of different products. The inventories 102 may indicate a location and the numbers of different products at each location. For example, the inventories 102 may indicate that there are ten pulleys and fifty elevator buttons at location A and twenty pulleys and twenty elevator buttons at location B.

The system 100 accesses geographic context data 104 that includes additional geographic details that may not be included in the orders 106 or the inventories 102 or both. The geographic context data 104 may include locations of the warehouses that store the inventories 102, the locations of where the orders 106 should be delivered, the locations of the equipment, e.g, trucks, trains, and planes, that will transport the products.

The system 100 access historical data 108 that includes data related to previous orders. The historical data 108 may include an order for a product, warehouse locations where trucks picked up the product, the size of each truck, the amount of product each truck transported, the route taken by the truck, the time needed to load and unload each truck, the time to drive the truck from the warehouse to the delivery location, the costs involved in transporting the goods such as fuel and labor, and other similar data. The system 100 may train, using machine learning, various prediction models 110. The prediction models 110 may include a load time prediction model 112. The load time prediction model 112 may be configured to predict the amount of time needed to load a particular product in a particular type of truck. The training data may include load times for different products in different types of trucks. The prediction models 110 may include a cost of transport prediction model 114. The cost of transport prediction model 114 may be configured to predict the cost to transport products from a particular warehouse to a particular location. The cost may include fuel, labor, and other related costs. The training data may include the route taken by the vehicle, the type of vehicle, the cost of the fuel, the number of personnel required to operate the vehicle, the amount of fuel, the time to move along the route, and other related data. The prediction models 110 may include a risk of delay prediction model 116. The risk of delay prediction model 116 may be configured to predict the likelihood of a delivery being delayed. The training data may include the route taken by the vehicle, the time to move along the route, the time to move along the route with no delay, the cause of the delay, the type of vehicle, the availability of alternate routes, and other related data. The prediction models 110 may include other prediction models 118.

The system 100 various data filters 120. The data filters 120 may include different filters such as filter 1 (122), filter 2 (124), and other filters 126. The system 100 may use the data filters 120 to focus the optimization on a particular product, a particular delivery location, a particular warehouse, a particular delivery time or day, a particular type or size of product, and/or any other similar parameter.

The system 100 includes a cost function 128 is configured to generate a graph that includes nodes connected by weighted edges. The nodes of the graph represent the locations of the products. The locations of the products may be included in the inventories 102 and may include locations of warehouses, factories, and other locations. For example, the nodes may represent factories that produce and have elevator buttons ready to ship. The nodes may also represent warehouses that store elevator pulleys that are ready to ship. The nodes may also represent locations where elevators will be installed and/or repaired. The edges of the graph represent a weighted cost of moving products between each node. The cost function 128 generates a weight for each edge using the prediction models 110 and the inventories 102, the orders 106, and the geographic context data 104. Each weight factors in the distance between the location represented by the node, the speed that a vehicle could travel between the locations, the type of transportation used to travel between the locations, current and/or expected weather conditions, and other additional factors. The cost function 128 may use the prediction models 110 to estimate factors that are not included in the received data. For example, the cost function 128 may use the load time model 112 to estimate the load time for elevator buttons. The cost function 128 may use the cost of transport 114 to estimate a cost for transporting pulleys. The cost of transport may include labor costs, fuel costs, and other monetary and non-monetary costs.

In some implementations, a user may adjust how the cost function 128 weights each of the different factors. For example, a user may indicate that monetary cost is most important and time is secondary. Another user may indicate that time is most important and monetary cost is secondary. There may be other factors that users adjust such as a particular delivery point being more important or moving inventory from a particular warehouse.

The system 100 includes a sub-graph generator 130 that is configured to divide the graph generated by the cost function 128 into multiple sub-graphs. The sub-graph generator 130 divides the graph according to product. For example, the sub-graph generator 130 generates a sub-graph that includes the weights and nodes for elevator buttons. The sub-graph generator 130 may also generate a sub-graph that includes the weights and nodes for pulleys.

The system 100 provides each of the sub-graphs to the optimization algorithms 132. The algorithms may include a minimum cost flow algorithm 134 and other algorithms 136. The optimization algorithms 132 are configured to generate an optimal transportation flow for each of the products. The transportation flow may include how a particular product should be transported from each of the different storage locations to each of the different delivery locations in order to minimize the costs as reflected in the weights of each edge on the sub-graph.

The system 100 includes a result aggregator 138 that is configured to aggregate the transportation flows for each of the products generated by the optimization algorithms 132. The result aggregator 138 may receive an optimal transportation flow for several different products and combine them into a single transportation flow. For example, the result aggregator 138 may combine the transportation flow of elevator buttons that describes how to transport the required number of elevator buttons between the delivery locations with the transportation flow of pulleys that describes how to transport the required number of pulleys between the delivery locations.

The system 100 provides the aggregated results to a bin packing algorithm 140. The bin packing algorithm 140 determines an optimized process to pack each product into each vehicle for transportation to the delivery location. The bin packing process may specify how many palettes of the product should be loaded into each vehicle, where the vehicle should delivery the product, and whether the vehicle should pick up any other product in route to delivering the product. The bin packing process may factor in the size of the vehicles, the time required to load and unload each palette on and off a vehicle, and the monetary costs involved in loading and unloading each palette. In some instances, a product may be divided among multiple vehicles. As an example, the bin packing algorithm 140 may specify that a vehicle should pick up three palettes of elevator buttons and delivery two palettes to a first location and one palette to a second location.

The system 100 provides the bin packing process to the routing module 142. The routing module 142 is configured to determine how the vehicles should move to pick up and delivery the different products and the routes that the vehicles should follow. The routing module 142 may be combined with the bin packing algorithm 140 or may be separate from the bin packing algorithm 140. If the bin packing algorithm 140 is separate from the routing module 142, then the bin packing algorithm 140 generates the packing and unpacking process for each truck and the routing module 140 generates the routes between each location. In some instances, the bin packing algorithm 140 indicates that the vehicles should travel from one location to another, and the routing module 142 indicates the particular route that each vehicle should take when traveling to each location. The routing module 142 considers the traffic conditions, the type of road, the type of vehicle, the weather, and any other conditions related to routing a vehicle.

The system 100 provides data identifying the packing process and the routes for vehicle to a results formatter 144. The results formatter 144 may be configured to format the bin packing results and the routing results into a format that is appropriate for the device that is receiving the results. For example, the system 100 may send the results to computing device 148 and may format the results for processing by and viewing on the computing device 148.

The system 100 generates routes 146 based on the formatted bin packing results and the routing results. The routes 146 may include a specific route for each vehicle and instructions for the amount of each product to pick up and drop off at each location.

The system 100 may provide the routes 146 to the computing device 148. The computing device 148 may provide the routes 146 to a mapping engine 150 that displays the routes of each vehicle. The mapping engine 150 may display a simulation of the routes and the loading and unloading actions of each vehicle. The mapping engine 150 may generate specific instructions and routes for each vehicle operator to follow to pick up and drop off each product. The mapping engine 150 may also generate instructions for the persons responsible for loading and unloading the vehicles at each location.

In more detail, organizations often have the need of a specific set of material at specific quantities at a certain location at a certain point in time so that a project can utilize the material to achieve some of its objectives or so that normal business operations can continue.

Materials, before they are needed, but after they have been produced, are typically stored in a warehouse. There are typically multiple layers of warehouses between the production and the final use of a material. A warehouse might belong to different organizations than the organization that finally consumes the material.

Logistics planners who are planning logistics for entities such as elevator repair companies are concerned with planning what materials are needed for projects, and they create logistics plans for projects to ensure that the project can receive materials in timely and cost-effective manners (e.g., push mode). In some business operations, materials are ordered when needed by a planner at or near the consuming entity (e.g., pull mode). Logistics planners at for elevator repair companies may be concerned with logistics that involve thousands of truck-loads to be delivered.

In some implementations, picked logistics planning system may be involved in a scenario of repairing elevators in many buildings in many cities across a region where each building will require material to be delivered to a location where the building is or where an elevator repair team sets up a staging area. The task of the logistics planner, when planning a repair job, is to plan what materials are to be delivered to each repair team and from where the material is delivered from. Materials may be stored in warehouses. In the case of elevator-related material, different types of warehouses may store different types of material. For example, some warehouses may store pulleys while others may store rails and tracks.. In the elevator repair context, the logistics planner is mostly concerned with both the monetary costs and time involved in each repair..

In an example, the elevator manufacturer engages in logistics planning prior to executing projects that install new elevators at customer sites. The logistics plan comprises what materials and tools are to be delivered to which project site and by what deadline. The logistics planner may be concerned with delivering "just in time" at lower cost of transport while keeping inventory low overall.

In some implementations, some of the transportation may be carried out in-house, while other transportation is conducted by third parties. Material may delivered from a warehouse owned by the organization or directly from third parties (e.g., suppliers or other partners).

Organizations may have an enterprise resource planning (ERP) system or comparative computer system that keeps track of warehouses and their geographical location, material inventory in each warehouse (and any reservations on these materials), currently open orders, and order fulfilment historical data. For example, the ERP can provide a list of all warehouses that store pulleys and their coordinates, the number of pulleys currently stored, and amounts available to fulfil new incoming orders. From the order fulfilment history, it may be possible to see how long the picking up and loading of each material has taken at a specific warehouse in the past with the corresponding time stamps.

The planning application on a planner's workstation can, through system integration, obtain such information from the ERP or other comparative system so that this information is available during planning the logistics for a project.

The logistics planner may place a new project on the map. In the case of the elevator company, the planner places a location of an elevator on the map of his workstation. The system on his workstation will automatically create a default material order for the elevator based on the type of building and the number and type of elevators in that building. The logistics planner will be able to review the order and modify as appropriate, including changing the priority of each line-item. Higher priority material may be needed faster, and the planner can make sure that the minimal material is delivered for the elevator team to begin working.

When the order has been finalized by the planner, the orders and inventories are send to the data filtering module 120, which will reduce, reorder, and/or rearrange the data to create appropriate input data for the subsequent processing steps.

Separately (and potentially less frequently, e.g., not every time when a new logistics plan is created) the historical data is used to train predictive models. For example, picking and load time history at a certain warehouse will be used to create a machine learning model, utilizing a well-known linear regression model, that is able to predict how long the picking up and loading for a specific material order will take at this warehouse at a certain time and date.

During the planning, the system makes predictions for multiple variations of orders at multiple times in order to obtain more realistic input for the optimization algorithm using the prediction models 110. There may be other types of predictions that can be used, provided that sufficient data exists to train the model and that the prediction has a bearing on the key performance indicators (KPI) that the logistics plan is optimized for. In the case where delivery time is the main concern, transport times and lead times, or more generally all times the overall order fulfilment takes, are the key input to the cost function. In another implementation, the system could use probabilities of travel routes to become unavailable (for example, a bridge may become damaged, or a road may be blocked). In some implementations, the cost function would factor into delivery time, monetary cost, and the cost of keeping inventory for longer.

The cost of each transportation means needed to fulfil an entire order (or all orders, such as multiple projects in parallel) can be computed with the cost function. For example, transporting one truck load of pulleys from one warehouse to the staging area, the cost function will add up the picking up and loading time predictions at the time the transport will occur for the warehouse from which the materials are to be fetched and the time it will take the truck to drive the load to the final destination. Any amount of additional factors can be included to calculate the overall delivery cost of this order in a similar fashion.

In some implementations, the sub-graph generator 130 takes orders, available warehouses, and material inventories and creates a graph where each warehouse is connected with each order delivery location, but also order locations and warehouses are connected, e.g. in a full graph. The graph is split into subgraphs by taking the full graph and eliminating all but one type of warehouses and their related connections to order delivery sites and other warehouses. This results in as many sub-graphs as there are warehouse types. For each sub-graph, the transport cost for each path is calculated using the cost function.

Each sub-graph is then separately submitted to the optimization algorithms 132. In some implementations, the optimization algorithms 132 includes a minimum cost flow algorithm 134. The result from the optimization algorithms 132 is a set of transports from specific warehouse to specific order delivery sites for each subgraph. In some implementations, all warehouses of one type provide all those goods that the warehouse type typically stocks, and one can set the inventory to zero for a specific warehouse, if that warehouse does not stock that specific material.

The result aggregator 138 component combines the list of all transports from warehouses to order delivery sites into one large list.

The bin packing algorithm 140 calculates which pallets (e.g., warehouses) are allocated to which trucks, so that truck constraint (e.g., number of trucks available and no truck can carry more than 30 pallets) is satisfied. The output may be: Truck number 1 must visit warehouses A, B and C, but may give no information in which order these warehouses are visited. These may be unordered routes.

The routing module 142 may be the final computing step. At this point, the system has determined which warehouse each transport needs to visit. The routing module 142 uses an algorithm based on distance and starts the routes from the furthest warehouse. The output may be something like this: Truck number 1 must visit warehouses in specific order: First A, then B then C. These may be considered ordered routes.

There are some algorithms that can handle both the bin packing algorithm 140 and the routing module 142 (e.g., capacitated vehicle routing algorithm & max flow), but may not be suitable for all uses. In some implementations, the system may assume that trucks can visit warehouses more than once, multiple trucks can visit one location, and partial deliveries are also supported (e.g., two trucks can fulfil the order instead of one).

In some instances, capacitated routing algorithms may not allow partial deliveries and assume that each warehouse is only visited by one truck. This implementation may give more control over the constraints.

The results formatter 144 filters, reorders, and rearranges result data so that it can be displayed in a planning application. When the logistics plan has been computed, the result may be displayed to the logistics planner in the planning application. The planner can then visualize the holistic plan (e.g., including all projects and all their delivery trips) and can then see how well the plan meets the KPI objectives. If necessary, the planner then modify orders, priorities, delivery locations, etc., and compare the resulting logistics plans with previous ones.

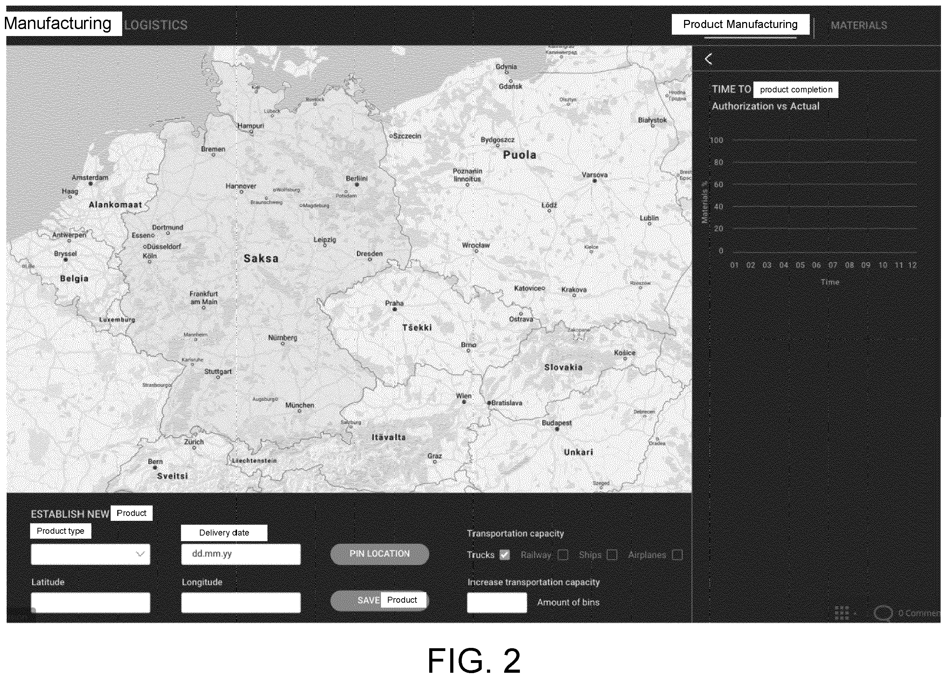

FIG. 2 is a screenshot of a graphical interface that allows a user to place new location for a product delivery by a) dragging a pin onto a map location b) entering the latitude and longitude coordinates. The interface in FIG. 2 also allows a user to enter a target delivery date and the type of product to be delivered.

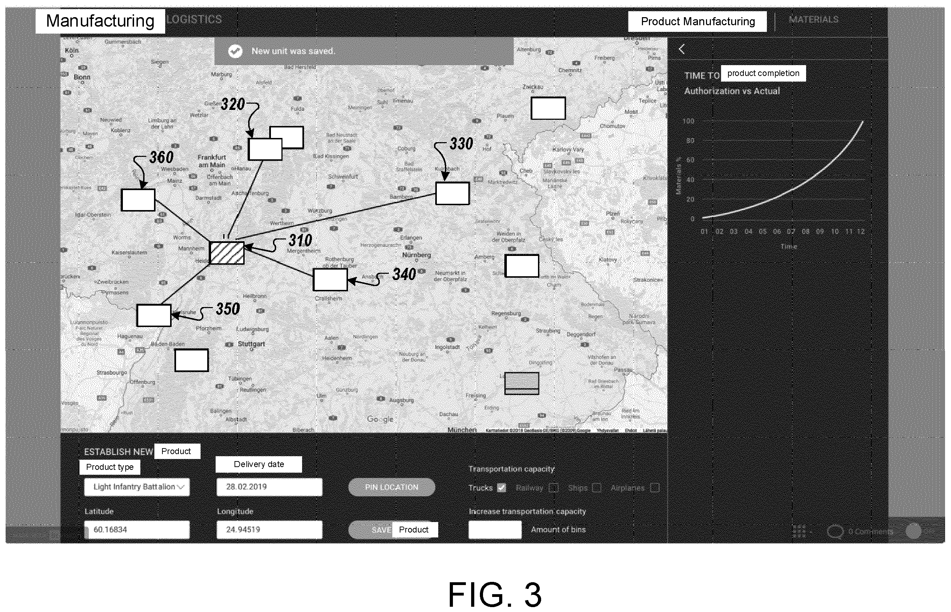

FIG. 3 is a screenshot of a graphical interface that displays the new delivery location 310 and rough routes from the warehouses 320, 330, 340, 350, and 360 from where the material will be delivered.

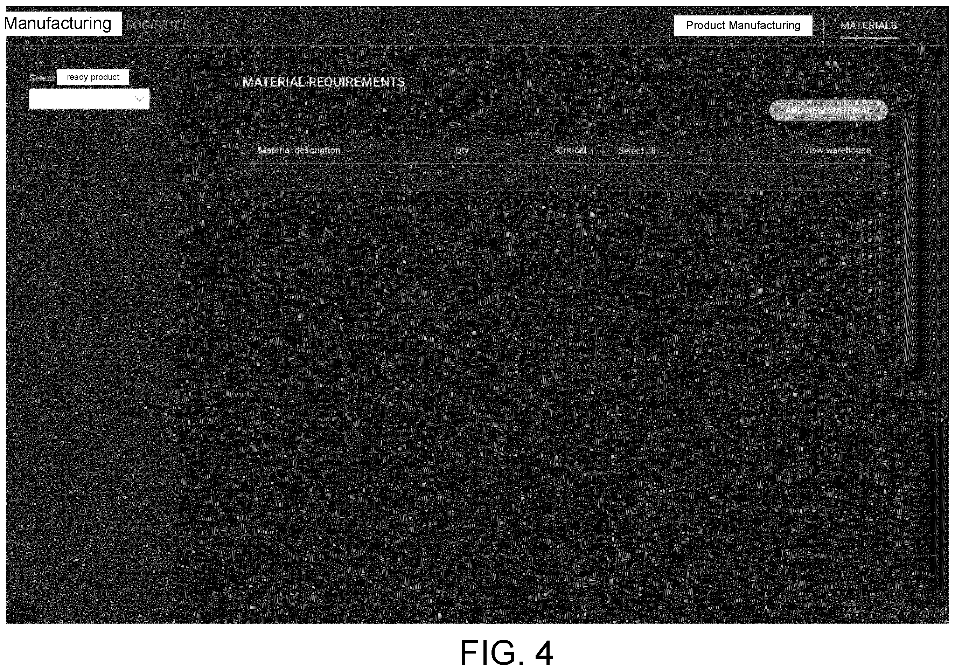

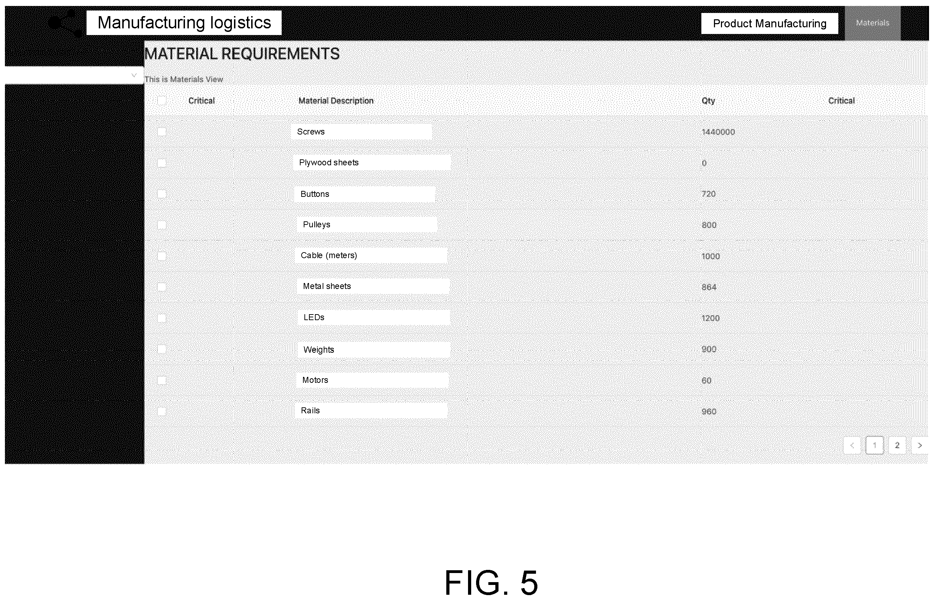

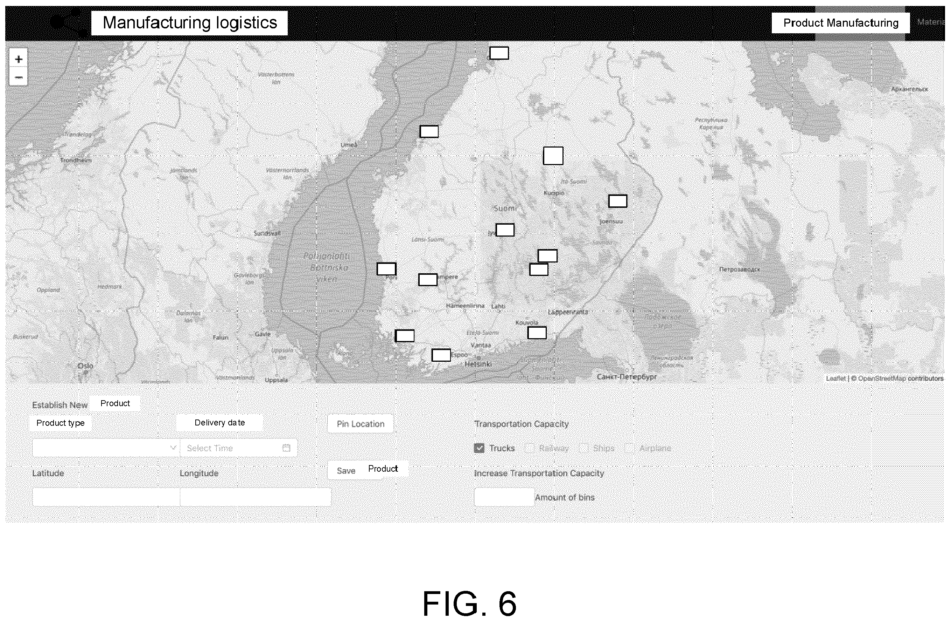

FIG. 4 is a screenshot that displays the material requirements included in the order for a repair team. FIG. 5 is a screenshot that displays various material requirements. FIG. 6 is a screenshot that displays various warehouse locations and delivery locations.

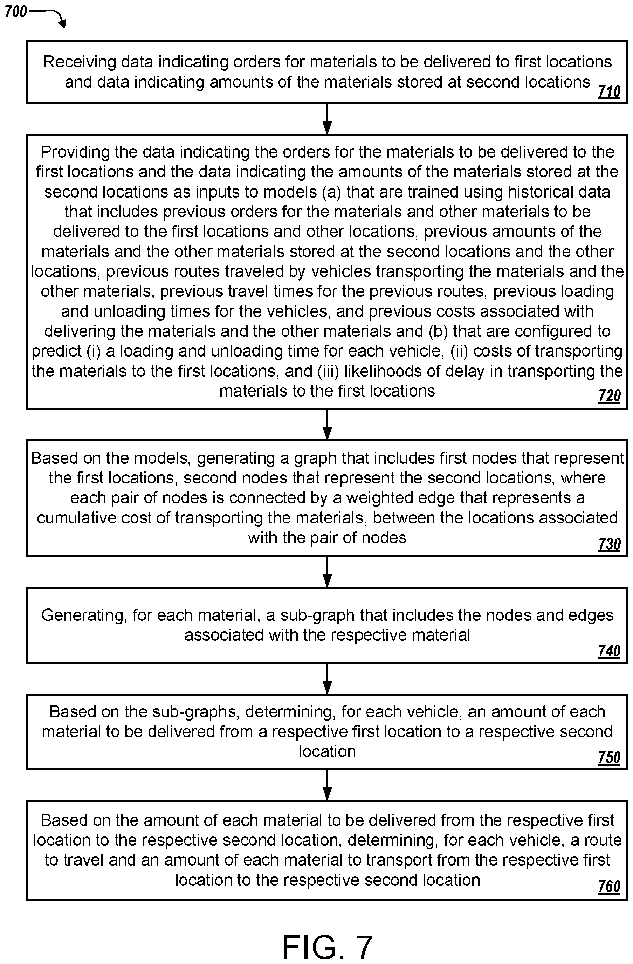

FIG. 7 is a flowchart of an example process 700 for logistics planning. In general, the process 700 generates a series of routes for a fleet of vehicles to transport goods from a storage location to a delivery location. The process 700 optimizes the routes according to the needs of the entity transporting the goods. The process 700 will be described as being performed by a computer system comprising one or more computers, for example, the system 100 of FIG. 1.

The system receives data indicating orders for materials to be delivered to first locations and data indicating amounts of the materials stored at second locations (710). The system provides the data indicating the orders for the materials to be delivered to the first locations and the data indicating the amounts of the materials stored at the second locations as inputs to models (a) that are trained using historical data that includes previous orders for the materials and other materials to be delivered to the first locations and other locations, previous amounts of the materials and the other materials stored at the second locations and the other locations, previous routes traveled by vehicles transporting the materials and the other materials, previous travel times for the previous routes, previous loading and unloading times for the vehicles, and previous costs associated with delivering the materials and the other materials and (b) that are configured to predict (i) a loading and unloading time for each vehicle, (ii) costs of transporting the materials to the first locations, and (iii) likelihoods of delay in transporting the materials to the first locations (720).

The system, based on the models, generates a graph that includes first nodes that represent the first locations, second nodes that represent the second locations, where each pair of nodes is connected by a weighted edge that represents a cumulative cost of transporting the materials, between the locations associated with the pair of nodes (730). The system generates, for each material, a sub-graph that includes the nodes and edges associated with the respective material (740). The system, based on the sub-graphs, determines, for each vehicle, an amount of each material to be delivered from a respective first location to a respective second location (750). The system, based on the amount of each material to be delivered from the respective first location to the respective second location, determines, for each vehicle, a route to travel and an amount of each material to transport from the respective first location to the respective second location (760).

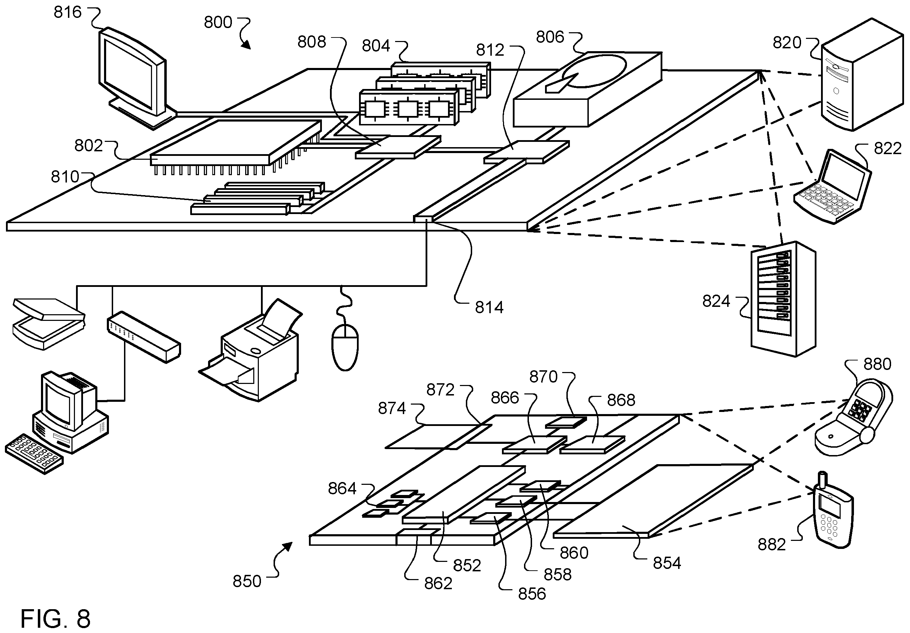

FIG. 8 shows an example of a computing device 800 and a mobile computing device 850 that can be used to implement the techniques described here. The computing device 800 is intended to represent various forms of digital computers, such as laptops, desktops, workstations, personal digital assistants, servers, blade servers, mainframes, and other appropriate computers. The mobile computing device 850 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 800 includes a processor 802, a memory 804, a storage device 806, a high-speed interface 808 connecting to the memory 804 and multiple high-speed expansion ports 810, and a low-speed interface 812 connecting to a low-speed expansion port 814 and the storage device 806. Each of the processor 802, the memory 804, the storage device 806, the high-speed interface 808, the high-speed expansion ports 810, and the low-speed interface 812, are interconnected using various busses, and may be mounted on a common motherboard or in other manners as appropriate. The processor 802 can process instructions for execution within the computing device 800, including instructions stored in the memory 804 or on the storage device 806 to display graphical information for a GUI on an external input/output device, such as a display 816 coupled to the high-speed interface 808. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 804 stores information within the computing device 800. In some implementations, the memory 804 is a volatile memory unit or units. In some implementations, the memory 804 is a non-volatile memory unit or units. The memory 804 may also be another form of computer-readable medium, such as a magnetic or optical disk.

The storage device 806 is capable of providing mass storage for the computing device 800. In some implementations, the storage device 806 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 802), perform one or more methods, such as those described above. The instructions can also be stored by one or more storage devices such as computer- or machine-readable mediums (for example, the memory 804, the storage device 806, or memory on the processor 802).

The high-speed interface 808 manages bandwidth-intensive operations for the computing device 800, while the low-speed interface 812 manages lower bandwidth-intensive operations. Such allocation of functions is an example only. In some implementations, the high-speed interface 808 is coupled to the memory 804, the display 816 (e.g., through a graphics processor or accelerator), and to the high-speed expansion ports 810, which may accept various expansion cards (not shown). In the implementation, the low-speed interface 812 is coupled to the storage device 806 and the low-speed expansion port 814. The low-speed expansion port 814, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 800 may be implemented in a number of different forms, as shown in the figure. For example, it may be implemented as a standard server 820, or multiple times in a group of such servers. In addition, it may be implemented in a personal computer such as a laptop computer 822. It may also be implemented as part of a rack server system 824. Alternatively, components from the computing device 800 may be combined with other components in a mobile device (not shown), such as a mobile computing device 850. Each of such devices may contain one or more of the computing device 800 and the mobile computing device 850, and an entire system may be made up of multiple computing devices communicating with each other.

The mobile computing device 850 includes a processor 852, a memory 864, an input/output device such as a display 854, a communication interface 866, and a transceiver 868, among other components. The mobile computing device 850 may also be provided with a storage device, such as a micro-drive or other device, to provide additional storage. Each of the processor 852, the memory 864, the display 854, the communication interface 866, and the transceiver 868, are interconnected using various buses, and several of the components may be mounted on a common motherboard or in other manners as appropriate.

The processor 852 can execute instructions within the mobile computing device 850, including instructions stored in the memory 864. The processor 852 may be implemented as a chipset of chips that include separate and multiple analog and digital processors. The processor 852 may provide, for example, for coordination of the other components of the mobile computing device 850, such as control of user interfaces, applications run by the mobile computing device 850, and wireless communication by the mobile computing device 850.

The processor 852 may communicate with a user through a control interface 858 and a display interface 856 coupled to the display 854. The display 854 may be, for example, a TFT (Thin-Film-Transistor Liquid Crystal Display) display or an OLED (Organic Light Emitting Diode) display, or other appropriate display technology. The display interface 856 may comprise appropriate circuitry for driving the display 854 to present graphical and other information to a user. The control interface 858 may receive commands from a user and convert them for submission to the processor 852. In addition, an external interface 862 may provide communication with the processor 852, so as to enable near area communication of the mobile computing device 850 with other devices. The external interface 862 may provide, for example, for wired communication in some implementations, or for wireless communication in other implementations, and multiple interfaces may also be used.

The memory 864 stores information within the mobile computing device 850. The memory 864 can be implemented as one or more of a computer-readable medium or media, a volatile memory unit or units, or a non-volatile memory unit or units. An expansion memory 874 may also be provided and connected to the mobile computing device 850 through an expansion interface 872, which may include, for example, a SIMM (Single In Line Memory Module) card interface. The expansion memory 874 may provide extra storage space for the mobile computing device 850, or may also store applications or other information for the mobile computing device 850. Specifically, the expansion memory 874 may include instructions to carry out or supplement the processes described above, and may include secure information also. Thus, for example, the expansion memory 874 may be provide as a security module for the mobile computing device 850, and may be programmed with instructions that permit secure use of the mobile computing device 850. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. that the instructions, when executed by one or more processing devices (for example, processor 852), perform one or more methods, such as those described above. The instructions can also be stored by one or more storage devices, such as one or more computer- or machine-readable mediums (for example, the memory 864, the expansion memory 874, or memory on the processor 852). In some implementations, the instructions can be received in a propagated signal, for example, over the transceiver 868 or the external interface 862.

The mobile computing device 850 may communicate wirelessly through the communication interface 866, which may include digital signal processing circuitry where necessary. The communication interface 866 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 868 using a radio-frequency. In addition, short-range communication may occur, such as using a Bluetooth, WiFi, or other such transceiver (not shown). In addition, a GPS (Global Positioning System) receiver module 870 may provide additional navigation- and location-related wireless data to the mobile computing device 850, which may be used as appropriate by applications running on the mobile computing device 850.

The mobile computing device 850 may also communicate audibly using an audio codec 860, which may receive spoken information from a user and convert it to usable digital information. The audio codec 860 may likewise generate audible sound for a user, such as through a speaker, e.g., in a handset of the mobile computing device 850. Such sound may include sound from voice telephone calls, may include recorded sound (e.g., voice messages, music files, etc.) and may also include sound generated by applications operating on the mobile computing device 850.

The mobile computing device 850 may be implemented in a number of different forms, as shown in the figure. For example, it may be implemented as a cellular telephone 880. It may also be implemented as part of a smart-phone 382, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet. In some implementations, the systems and techniques described here can be implemented on an embedded system where speech recognition and other processing is performed directly on the device.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. For example, while a client application is described as accessing the delegate(s), in other implementations the delegate(s) may be employed by other applications implemented by one or more processors, such as an application executing on one or more servers. In addition, the logic flows depicted in the figures do not require the particular order shown, or sequential order, to achieve desirable results. In addition, other actions may be provided, or actions may be eliminated, from the described flows, and other components may be added to, or removed from, the described systems. Accordingly, other implementations are within the scope of the following claims.

## Claims

1. A computer-implemented method comprising:
receiving, by a computing device, data indicating orders for materials to be delivered to first locations and data indicating amounts of the materials stored at second locations;
providing, by the computing device, the data indicating the orders for the materials to be delivered to the first locations and the data indicating the amounts of the materials stored at the second locations as inputs to models (a) that are trained using historical data that includes previous orders for the materials and other materials to be delivered to the first locations and other locations, previous amounts of the materials and the other materials stored at the second locations and the other locations, previous routes traveled by vehicles transporting the materials and the other materials, previous travel times for the previous routes, previous loading and unloading times for the vehicles, and previous costs associated with delivering the materials and the other materials and (b) that are configured to predict (i) a loading and unloading time for each vehicle, (ii) costs of transporting the materials to the first locations, and (iii) likelihoods of delay in transporting the materials to the first locations;
based on the models, generating, by the computing device, a graph that includes first nodes that represent the first locations, second nodes that represent the second locations, wherein each pair of nodes is connected by a weighted edge that represents a cumulative cost of transporting the materials, between the locations associated with the pair of nodes;
generating, by the computing device and for each material, each type of material, or each type of location that stores the material, a sub-graph that includes the nodes and edges associated with the respective material;
based on the sub-graphs, determining, by the computing device and for each vehicle, an amount of each material to be delivered from a respective first location to a respective second location; and
based on the amount of each material to be delivered from the respective first location to the respective second location, determining, by the computing device and for each vehicle, a route to travel and an amount of each material to transport from the respective first location to the respective second location.
